# FASCICULE DE BREVET EUROPEEN

(11) **EP 0 718 486 B1**
(45) Date de publication et mention de la délivrance du brevet: **14.11.2001**
(21) Numéro de dépôt: 95402805.6
(22) Date de dépôt: 13.12.1995
(51) Int. Cl.: F02K 1/56, F02K 1/70, F02K 1/58

(54) **Inverseur de poussée pour moteur à réaction avec cloison interne perforée**
Schubumkehrvorrichtung mit perforierter Innenabdeckung für ein Strahltriebwerk
Jet engine thrust reverser with perforated inner cover

(30) Priorité: 21.12.1994 FR 9415389
(43) Date de publication de la demande: 26.06.1996
(73) Titulaire: SOCIETE DE CONSTRUCTION DES AVIONS HUREL-DUBOIS, F-92360 Meudon la Forêt (FR)
(72) Inventeur: Meyer, Pascal, F-92140 Clamart (FR)
(74) Mandataire: Sauvage, Renée

(56) Documents cités:
- FR-A- 2 382 594
- FR-A- 2 629 135
- FR-A- 2 635 825
- FR-A- 2 695 436
- GB-A- 2 117 720
- US-A- 2 847 823
- US-A- 4 093 122
- US-A- 5 224 342
- US-A- 5 372 006

## Description

La présente invention concerne un perfectionnement aux inverseurs de poussée pour moteur à réaction, avec ou sans dilution du jet principal, destiné notamment à être monté sur un aéronef.

Plus particulièrement, elle concerne les inverseurs de poussée du type connu à portes pivotantes articulées sur un capotage entourant le moteur, lequel inverseur comporte un panneau interne délimitant avec ledit capotage un canal dans lequel circule un flux gazeux, dit "canal du jet moteur", lesdites portes étant susceptibles d'évoluer d'une position escamotée ou de croisière, dans laquelle elles sont dans le prolongement du capotage et permettent une circulation dudit flux en jet direct, à une position déployée ou d'inversion dans laquelle elles obturent au moins partiellement le canal du jet moteur et libèrent un puits de déviation de flux, ménagé dans le panneau interne du capotage, en permettant au flux de s'échapper radialement vers l'extérieur et vers l'amont du moteur.

A cet effet, les portes de ce type sont en général équipées à leur extrémité amont d'un becquet de déviation et elles présentent un panneau interne qui, en position escamotée des portes, est écarté radialement vers l'extérieur par rapport à la surface du panneau interne du capotage, un espace libre ou cavité étant ainsi ménagé, au niveau du puits de déviation, entre chaque porte et la limite externe de la veine de flux gazeux déterminée par la surface du panneau interne du capotage. FR-A-2 506 843 et FR-A-2 559 838 décrivent de tels dispositifs.

Toutefois, dans ces dispositifs connus, si l'existence du becquet de déviation assure un écoulement optimal du flux dévié lors de l'ouverture des portes, la présence de l'espace libre ou cavité -lorsque les portes sont en position fermée- provoque une distorsion du flux en jet direct et des perturbations dans l'écoulement qui sont préjudiciables au fonctionnement en poussée directe à cause des pertes aérodynamiques qui en résultent.

Pour remédier à cet inconvénient, diverses solutions ont déjà été proposées notamment par FR-A-2 627 807, FR-A-2 634 251, FR-A-2 635 825 et FR-A-2 629 135, par exemple. Ces solutions consistent pour l'essentiel soit à réduire la longueur du becquet de déviation, soit à ajouter, à la porte ou à la cloison interne du capotage, une pièce mobile qui obture la cavité lorsque la porte est fermée. Ces solutions présentent soit l'inconvénient de réduire la section de passage du puits de déviation, soit de compliquer et d'alourdir la structure de porte ou de capotage.

La présente invention propose une solution simple et économique, consistant à séparer la cavité de la veine de flux gazeux par une cloison séparatrice, solidaire du panneau interne du capotage et percée d'ouvertures mettant en communication ladite cavité avec le canal du jet moteur.

La cloison séparatrice est fixe et avantageusement alignée avec la surface de la cloison interne du capotage en se confondant ainsi avec l'enveloppe théorique de délimitation aérodynamique parfaite de la veine du flux des gaz circulant en jet direct. En jouant sur le nombre, la taille et la densité des ouvertures pratiquées dans la cloison, on pourra répondre à des besoins différents. Ainsi dans certains cas extrêmes, la cloison séparatrice, qui s'étend sur une partie du puits de déviation à partir du bord amont de celui-ci, pourra s'étendre sur toute la zone de la cavité.

Selon une forme de réalisation préférée de l'invention, les ouvertures percées dans la cloison séparatrice auront avantageusement la forme de lumières oblongues, ces lumières permettant d'agir sur la distribution circonférentielle des flux déviés par l'inverseur déployé en prévoyant une densité de lumières par unité de surface variable selon les zones. De même, en jouant sur l'orientation générale du grand axe des lumières, on pourra assurer localement une orientation voulue du flux dévié. Ainsi les lumières pourront être, dans certains cas orientées soit parallèlement à l'axe du moteur, soit transversalement, soit encore en biais par rapport à celui-ci.

Par ailleurs la surface totale des ouvertures dans la cloison devra être calculée de telle manière que, malgré la présence de la cloison obturant partiellement le puits de déviation, le flux inverse puisse être évacué sans restriction.

Afin de ne pas détériorer la qualité de l'écoulement, on veille à ce qu'en position de portes fermées, la pression régnant dans la cavité soit la même que celle qui règne dans le canal du jet moteur, ce qui est rendu possible à la fois par l'existence des ouvertures dans la cloison séparatrice et par le fait que la partie fixe de capotage comporte, au voisinage du bord amont du puits de déviation, un moyen d'étanchéité avec lequel coopère le panneau interne de la porte lorsqu'elle est en position fermée afin d'isoler la cavité du milieu ambiant extérieur au moteur.

On décrira à présent l'invention en référence aux dessins annexés dans lesquels :
la figure 1 représente, vu en coupe longitudinale, un schéma d'inverseur à porte de type connu antérieurement à l'invention ;
la figure 2 est une vue générale en perspective d'un inverseur à deux portes en position ouverte, équipé selon l'invention
la figure 3 est une vue en coupe longitudinale partielle d'un inverseur selon l'invention, et
les figures 4a, 4b, 4c et 4d sont des vues partielles, selon la flèche IV de la figure 3, de cloisons séparatrices selon diverses formes de réalisation.

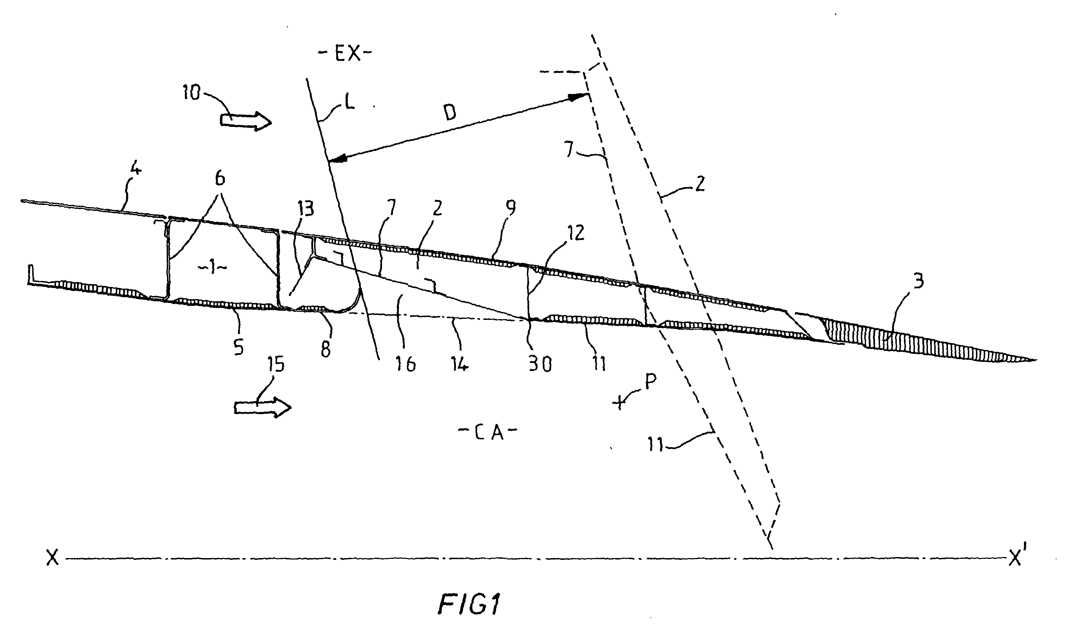

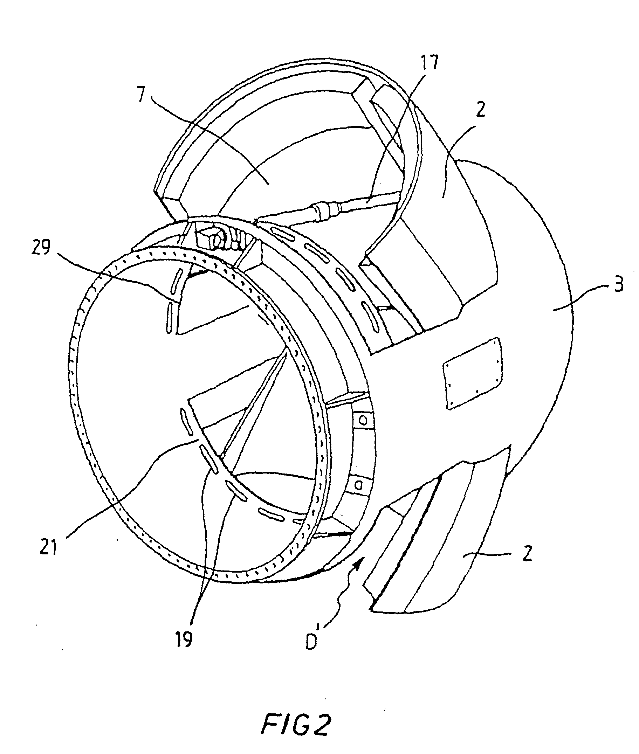

La figure 1 des dessins joints montre pour la clarté de l'exposé un exemple connu de réalisation d'un inverseur à portes, composé de trois parties principales, à savoir, d'amont en aval, par référence à la direction du flux de gaz moteur en jet direct (non dévié) : une partie fixe amont 1, située dans le prolongement de la paroi externe du canal moteur dont on a matérialisé en X-X' l'axe longitudinal, des portes mobiles 2 et une virole arrière fixe 3. La partie fixe amont 1 comprend un panneau externe 4 de nacelle, un panneau interne 5 limitant extérieurement la veine du flux gazeux du moteur symbolisé par la flèche 15 et une structure amont 6 composée soit d'un cadre avant, soit d'un caisson avant, qui assure la jonction desdits panneaux 4 et 5. La structure amont 6 sert également de support au dispositif de commande des déplacements des portes mobiles 2 qui sont articulées de façon basculante sur des pivots P solidaires de la partie fixe du capotage du moteur. Le nombre de portes peut varier en fonction des applications particulières ; par exemple deux, trois ou quatre portes formant un ensemble annulaire, éventuellement en coopération avec une partie fixe, selon le mode de montage de l'ensemble de propulsion constitué par le turboréacteur sur l'avion. Bien que l'on soit en train de rappeler l'art antérieur, on peut se rapporter, en ce qui concerne les portes, à la figure 2 qui montre, selon une vue en perspective, un exemple de réalisation d'un inverseur de poussée selon l'invention dans une application comportant deux portes, chaque porte étant associée à un moyen de commande des déplacements tel qu'un vérin 17. En position ouverte, les portes 2 dégagent dans le capotage du moteur un puits de déviation indiqué en D', la différence entre le puits D' de l'invention et le puits D de l'art antérieur étant expliquée plus loin.

Comme il ressort de la figure 1, le puits de déviation D est limité, côté aval, par la partie avant 7 de la paroi interne 11 de la porte 2 et, côté amont, par la surface L parallèle à la direction générale de la porte 2 en position ouverte, et passant par l'extrémité aval d'un bord de déviation 8 par lequel se termine la partie fixe 1 du capotage, ledit bord de déviation 8 étant fixé sous la structure amont 6. Chaque porte 2 est composée d'un panneau externe 9 venant se placer, en position jet direct, dans le prolongement du panneau externe 4 de la partie fixe amont 1 pour constituer la paroi aérodynamique continue limitant le flux extérieur au moteur représenté par la flèche 10 ; d'un panneau interne 11 et d'une structure intérieure 12, assurant la liaison entre les panneaux 9 et 11. La porte 2 est complétée à son extrémité amont par un becquet déflecteur 13 destiné à canaliser l'écoulement inversé lorsque l'inverseur se trouve en position d'inversion de poussée, c'est-à-dire avec la porte 2 en position ouverte ou déployée (figure 2 et position en pointillés à la figure 1). Afin que la porte 2 en position ouverte d'inversion de poussée assure des performances suffisantes, il est habituellement nécessaire, comme dans l'exemple connu représenté à la figure 1, que la partie avant 7 du panneau interne 11 s'écarte, dans une direction radiale extérieure, d'une surface théorique représentée par la ligne 14, correspondant à l'enveloppe théorique de délimitation aérodynamique continue parfaite de la veine du flux de gaz en jet direct, interne au moteur, représentée par la flèche 15. Une cavité 16 se trouve ainsi formée du côté intérieur de la porte 2 lorsqu'elle se trouve en position fermée. En mode jet direct, une partie du flux pénètre la cavité 16, créant ainsi une distorsion du flux et des perturbations dans l'écoulement. Il en résulte des pertes aérodynamiques qui sont néfastes au fonctionnement en poussée directe.

On décrira à présent l'invention en référence aux figures 2, 3 et 4a à 4d dans lesquelles les organes similaires à ceux de la figure 1 sont désignés par les mêmes chiffres de référence.

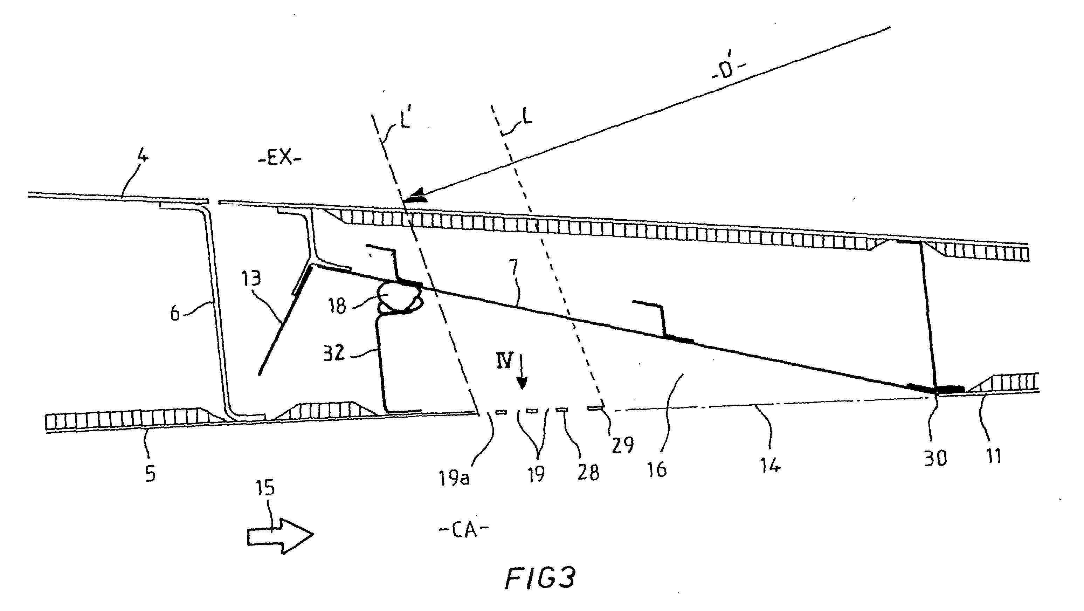

Comme on le voit particulièrement à la figure 3, une cloison séparatrice 28 solidaire du panneau interne 5 s'étend entre le canal interne CA où circule le flux de gaz en jet direct 15 et la cavité 16. Cette cloison 28 est fixe et se confond avec la ligne 14 précitée, dans le prolongement de la cloison interne 5 du capotage et de la partie aval du panneau interne 11 de la porte ou du panneau interne de la virole arrière 3.

Dans l'exemple représenté, la cloison 28 ne couvre qu'une partie de la cavité 16 mais elle pourrait s'étendre sur toute la longueur de celle ci. En tout état de cause elle ne s'étend que sur une partie du puits de déviation D' en ménageant ainsi une section de passage suffisante pour le flux inversé. De préférence, l'extrémité aval 29 de la cloison 28 se termine en arrondi, ou cette extrémité aval peut être munie d'un dispositif mécanique servant à l'amélioration des performances aérodynamiques, tel qu'une partie mobile, revêtant par exemple la forme d'une lèvre mobile. Un tel dispositif mécanique peut être manoeuvré par des organes articulés, commandés par le vérin 17 d'actionnement des portes (figure 2).

Par ailleurs la cloison séparatrice 28 est percée d'ouvertures 19 qui font communiquer l'espace du canal interne CA avec l'intérieur de la cavité 16, de sorte que l'on peut considérer que le bord amont du puits de déviation D' correspond non pas à la surface L, comme à la figure 1, mais à la surface L', parallèle à L et passant par le bord amont de l'ouverture la plus amont 19a de la cloison séparatrice 28. On comprend que, par rapport à l'art antérieur illustré à la figure 1, la surface ouverte, le long de la ligne 14, entre la surface L' délimitant l'extrémité amont du puits de déviation D' et la ligne 30 à partir de laquelle la partie avant 7 du panneau interne 11 de porte s'écarte radialement du reste dudit panneau, est réduite selon l'invention puisque cette surface correspond à la somme de la surface des ouvertures 19 de la cloison séparatrice 28, et de la surface restant ouverte entre le bord aval 29 de ladite cloison et ladite ligne 30.

A la figure 2, pour ne pas surcharger le dessin, on n'a représenté qu'une seule série périphérique d'ouvertures 19 dans la cloison séparatrice 28.

Comme on le voit à la figure 3, la structure fixe du capotage comporte une pièce 32 munie d'un joint d'étanchéité 18 situé sensiblement au niveau du bord amont du puits de déviation D' et contre lequel vient reposer la partie avant 7 de panneau interne de porte en position de porte escamotée ou fermée, afin d'isoler la cavité 16 du milieu ambiant EX extérieur au moteur.

De la sorte, la cavité 16 se trouve isolée de l'espace extérieur EX environnant le moteur et, lorsque le moteur fonctionne en jet direct (portes fermées), la pression statique dans la cavité 16 est à peu près identique à la pression régnant dans le canal interne CA. De ce fait, l'écoulement du flux de gaz en jet direct 15 dans ledit canal CA n'est pas affecté par la présence des ouvertures 19.

En revanche, lorsque le moteur fonctionne en mode de jet inversé, l'ouverture de la porte 2 fait que la cavité 16 se trouve mise en communication avec l'air ambiant de l'espace EX et la pression statique dans la cavité 16 chute puisque la pression régnant à l'extérieur du moteur est inférieure à celle du canal interne CA. Il apparaît donc ainsi une forte variation de pression de part et d'autre de la cloison séparatrice 28, ce qui permet au flux dévié de bien s'écouler à travers le puits de déviation D'.

La forme, la disposition et le nombre d'ouvertures 19 dans la cloison séparatrice 28 peuvent être quelconques et seront fonction des performances aérodynamiques à respecter.

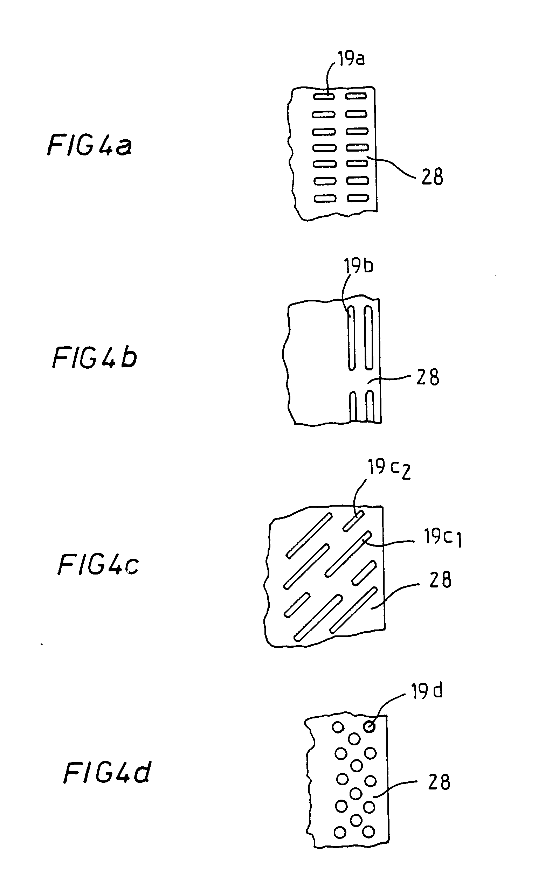

Toutefois, une forme préférée pour les ouvertures 19 sera celle de lumières oblongues dont le grand axe pourra être parallèle à l'axe du moteur comme représenté en 19a à la figure 4a ou transversal à l'axe du moteur comme représenté en 19b à la figure 4b. Dans certains cas, le grand axe des lumières pourra être en biais, par rapport audit axe, comme représenté à la figure 4c, éventuellement avec une alternance de lumières oblongues 19c₁ et de lumières plus courtes 19c₂.

On pourrait aussi, comme à la figure 4d, prévoir comme ouvertures, simplement une multiplicité de trous 19d, par exemple, disposés en quinconce.

On pourrait également simplement élaborer la cloison 28 à l'aide d'un matériau poreux dont les pores joueraient le rôle des ouvertures voulues.

Le choix de la forme, de la densité, des dimensions et de l'orientation des ouvertures permet d'agir sur la distribution et le guidage des flux d'air déviés par l'inverseur en position de portes déployées.

Selon le type de matériau utilisé pour la cloison séparatrice 28, si le matériau n'est pas naturellement poreux, les ouvertures seront obtenues soit par usinage dans le cas de cloison métallique, soit par moulage ou déroutage dans le cas de matériaux composites.

## Revendications

1. Inverseur de poussée pour moteur à réaction, notamment d'aéronef, du type à portes pivotantes (2) articulées sur un capotage entourant le moteur, lequel inverseur comporte un panneau interne (5) délimitant, avec ledit capotage, un canal dans lequel circule un flux gazeux (15) dit "canal du jet moteur" (CA), lesdites portes (2) étant susceptibles d'évoluer d'une position escamotée ou de croisière, dans laquelle elles sont dans le prolongement du capotage et permettent une circulation dudit flux en jet direct, à une position déployée ou d'inversion dans laquelle elles obturent au moins partiellement le canal du jet moteur (CA) et libèrent un puits de déviation de flux ménagé dans le panneau interne (5) du capotage et permettant au flux de s'échapper radialement vers l'extérieur et vers l'amont du moteur, lesdites portes (2) étant équipées, à leur extrémité amont, d'un becquet de déviation (13) et présentant un panneau interne (11) qui, en position escamotée des portes, est écarté radialement vers l'extérieur par rapport à la surface du panneau interne (5) du capotage, une cavité libre (16) étant ainsi ménagée, au niveau du puits de déviation, entre chaque porte (2) et la limite externe (14) de la veine de flux gazeux déterminée par la surface du panneau interne (5) du capotage, et, pour éviter, en jet direct, les perturbations dues à la présence de ladite cavité (16), celle-ci est séparée de la veine de flux gazeux (15) par une cloison séparatrice (28), ledit inverseur étant **caractérisé en ce que** la cloison séparatrice (28) est solidaire du panneau interne (5) du capotage et percée d'ouvertures (19) mettant en communication la cavité (16) avec le canal du jet moteur.

2. Inverseur de poussée selon la revendication 1 **caractérisé en ce que** la cloison séparatrice (28) est alignée avec la surface du panneau interne (5) du capotage.

3. Inverseur de poussée selon la revendication 1 ou 2, **caractérisé en ce que** la cloison séparatrice (28) s'étend sur une partie du puits de déviation (D') à partir du bord amont de celui-ci.

4. Inverseur de poussée selon l'une quelconque des revendications précédentes, **caractérisé en ce qu'**il est prévu, sur la partie fixe de capotage, au voisinage du bord amont du puits de déviation (D'), un moyen d'étanchéité (18) avec lequel coopère le panneau interne de la porte, lorsqu'elle est en position escamotée, afin d'isoler la cavité (16) du milieu ambiant (EX) extérieur au moteur.

5. Inverseur de poussée selon l'une quelconque des revendications précédentes, **caractérisé en ce que** les ouvertures percées dans la cloison séparatrice ont la forme de lumières oblongues (19).

6. Inverseur de poussée selon la revendication 5, **caractérisé en ce que** les lumières (19a) sont disposées parallèlement à l'axe du moteur.

7. Inverseur de poussée selon la revendication 5, **caractérisé en ce que** les lumières (19b) sont disposées transversalement à l'axe du moteur.

8. Inverseur de poussée selon la revendication 5, **caractérisé en ce que** les lumières (19c₁ -19c₂) sont disposées en biais par rapport à l'axe du moteur.

9. Inverseur selon l'une quelconque des revendications précédentes, **caractérisé en ce que** la cloison séparatrice (28) est obtenue à partir d'un matériau poreux, dont les pores font office d'ouvertures.

10. Inverseur selon l'une quelconque des revendications précédentes, **caractérisé en ce que** l'extrémité aval (29) de la cloison séparatrice (28) se termine en arrondi.

11. Inverseur selon l'une quelconque des revendications 1 à 9, **caractérisé en ce que** la cloison séparatrice (28) est munie, à son extrémité libre, d'un dispositif mécanique servant à l'amélioration des performances aérodynamiques.

12. Inverseur selon la revendication 11, **caractérisé en ce que** ledit dispositif mécanique est une partie mobile pouvant être manoeuvrée par des organes articulés, commandés par les moyens (17) assurant l'évolution des portes (2) entre leur position escamotée et leur position déployée.

13. Inverseur selon la revendication 12, **caractérisé en ce que** ladite partie mobile est une lèvre mobile.

## Patentansprüche

1. Schubumkehrvorrichtung für ein Strahltriebwerk insbesondere eines Luftfahrzeuge mit verschwenkbaren Türen (2), die an einer den Motor umgebenden Verkleidung angelenkt sind, wobei diese Schubumkehrvorrichtung eine Innenwand (5) aufweist, die mit dieser Verkleidung einen Kanal, "Kanal des Triebwerkstrahls" (CA) genannt, abgrenzt, in dem ein Gasstrom (15) fließt, wobei diese Türen (2) sich von einer eingeklappten oder Flugstellung, in der sie sich in der Verlängerung der Verkleidung befinden und eine Zirkulation dieses Stroms in direktem Strahl gestatten, in eine ausgeklappte oder Umkehrstellung bewegen können, in der sie den Kanal des Triebwerkstrahls (CA) mindestens teilweise verschließen und einen in der Innenwand (5) der Verkleidung vorgesehenen Stromablenkungsschacht freilegen, der das radiale Austreten des Stroms nach außen und auf die stromaufgelegene Seite des Motors zu gestattet, wobei diese Türen (2) an ihrem stromauf gelegenen Ende mit einen Ablenkspoiler (13) versehen sind und eine Innenwand (11) besitzen, die in eingeklappter Stellung der Türen bezüglich der Fläche der Innenwand (5) der Verkleidung radial nach außen entfernt ist, wodurch auf Höhe des Ablenkschachts zwischen jeder Tür (2) und der durch die Fläche der Innenwand (5) der Verkleidung definierten Außengrenze (14) der Gasstromader ein freier Hohlraum (16) gebildet wird, der, um bei direktem Strahl die durch das Vorhandensein dieses Hohlraums (16) erzeugten Störungen zu vermeiden, von der Gasstromader (15) durch eine Trennwand (28) getrennt ist, wobei diese Umkehrvorrichtung **dadurch gekennzeichnet ist, dass** die Trennwand (28) mit der Innenwand (5) der Verkleidung fest verbunden ist und mit Öffnungen (19) versehen ist, die den Hohlraum (16) mit dem Kanal des Triebwerkstrahls verbinden.

2. Schubumkehrvorrichtung nach Anspruch 1, **dadurch gekennzeichnet, dass** die Trennwand (28) mit der Fläche der Innenwand (5) der Verkleidung in Flucht ist.

3. Schubumkehrvorrichtung nach Anspruch 1 oder 2, **dadurch gekennzeichnet, dass** die Trennwand (28) sich von dem stromauf gelegenen Rand des Ablenkschachts (D') aus über einen Teil von diesem erstreckt.

4. Schubumkehrvorrichtung nach einem der vorhergehenden Ansprüche, **dadurch gekennzeichnet, dass** auf dem feststehenden Verkleidungsteil in Nähe des stromauf gelegenen Rands des Ablenkschachts (D') ein Dichtungsmittel (18) vorgesehen ist, mit dem die Innenwand der Tür zusammenwirkt, wenn sie in eingeklappter Stellung ist, um den Hohlraum (16) von dem umgebenden Medium (EX) außerhalb des Motors zu isolieren.

5. Schubumkehrvorrichtung nach einem der vorhergehenden Ansprüche, **dadurch gekennzeichnet, dass** die in der Trennwand vorgesehenen Öffnungen die Form von Langlöchern (19) haben.

6. Schubumkehrvorrichtung nach Anspruch 5, **dadurch gekennzeichnet, dass** die Löcher (19a) parallel zur Achse des Motors angeordnet sind.

7. Schubumkehrvorrichtung nach Anspruch 5, **dadurch gekennzeichnet, dass** die Löcher (19b) quer zur Achse des Motors angeordnet sind.

8. Schubumkehrvorrichtung nach Anspruch 5, **dadurch gekennzeichnet, dass** die Löcher (19c₁ - 19c₂) schräg zur Achse des Motors angeordnet sind.

9. Schubumkehrvorrichtung nach einem der vorhergehenden Ansprüche, **dadurch gekennzeichnet, dass** die Trennwand (28) aus einem porösen Werkstoff gebildet ist, dessen Poren als Öffnungen dienen.

10. Umkehrvorrichtung nach einem der vorhergehenden Ansprüche, **dadurch gekennzeichnet, dass** das stromab gelegene Ende (29) der Trennwand (28) als Abrundung endet.

11. Umkehrvorrichtung nach einem der Ansprüche 1 bis 9, **dadurch gekennzeichnet, dass** die Trennwand (28) an ihrem freien Ende mit einer mechanischen Vorrichtung versehen ist, die zur Verbesserung der aerodynamischen Leistungen dient.

12. Umkehrvorrichtung nach Anspruch 11, **dadurch gekennzeichnet, dass** die mechanische Vorrichtung ein beweglicher Teil ist, der durch angelenkte Organe betätigt werden kann, die durch die Mittel (17) gesteuert werden, die die Bewegung der Türen (2) zwischen ihrer eingeklappten Stellung und ihrer ausgeklappten Stellung gewährleisten.

13. Umkehrvorrichtung nach Anspruch 12, **dadurch gekennzeichnet, dass** der bewegliche Teil eine bewegliche Lippe ist.

## Claims

1. A thrust reverser for a jet engine, especially for an aircraft, of the type having pivoting doors (2) articulated to a cowling surrounding the engine, which reverser includes an internal panel (5) delimiting, together with said cowling, a pipe in which a gaseous flow (15) flows, known as a "jet pipe" (CA), it being possible for said doors (2) to move from a stowed or cruise position in which they are in the extension of the cowling and allow said flow to flow in direct jet mode, to a deployed or reversal position in which they at least partially close off the jet pipe (CA) and open up a flow deflection well formed in the internal panel (5) of the cowling and allowing the flow to escape radially toward the exterior and toward the upstream end of the engine, said doors (2) being equipped at their upstream end with a deflection spoiler (13) and exhibiting an internal panel (11) which, when the doors are in the stowed position, is separated radially toward the exterior with respect to the surface of the internal panel (5) of the cowling, an empty cavity (16) thus being formed, in the region of the deflection well, between each door (2) and the external boundary (14) of the stream of gaseous flow determined by the surface of the internal panel (5) of the cowling, and said reverser being **characterized in that**, to avoid, in direct jet mode, the disturbances which are due to the presence of said cavity (16), the latter is separated from the stream of gaseous flow (15) by a partition (28), the partition (28) is integral with the internal panel (5) of the cowling and pierced with openings (19) placing the cavity (16) in communication with the jet pipe.

2. The thrust reverser as claimed in claim 1, wherein the partition (28) is aligned with the surface of the internal panel (5) of the cowling.

3. The thrust reverser as claimed in claim 1 or 2, wherein the partition (28) extends over part of the deflection well (D') starting from the upstream edge thereof.

4. The thrust reverser as claimed in any of the preceding claims, wherein there is provided, on the stationary part of the cowling, close to the upstream edge of the deflection well (D'), a sealing means (18) with which the internal panel of the door interacts when the door is in the stowed position, so as to isolate the cavity (16) from the ambient medium (EX) external to the engine.

5. The thrust reverser as claimed in any of the preceding claims, wherein the openings pierced in the partition have the shape of oblong slots (19).

6. The thrust reverser as claimed in claim 5, wherein the slots (19a) are arranged parallel to the axis of the engine.

7. The thrust reverser as claimed in claim 5, wherein the slots (19b) are arranged transversely to the axis of the engine.

8. The thrust reverser as claimed in claim 5, wherein the slots (19c₁-19c₂)) are arranged at an angle with respect to the axis of the engine.

9. The reverser as claimed in any of the preceding claims, wherein the partition (28) is obtained from a porous material, in which the pores act as slots.

10. The reverser as claimed in any of the preceding claims, wherein the downstream end (29) of the partition (28) terminates in a rounded portion.

11. The reverser as claimed in any of claims 1 to 9, wherein the partition (28) is equipped, at its free end, with a mechanical device serving to improve the aerodynamic performance.

12. The reverser as claimed in claim 11, wherein said mechanical device is a moving part which can be operated by articulated members controlled by the means (17) which move the doors (2) between their stowed position and their deployed position.

13. The reverser as claimed in claim 12, wherein said moving part is a moving lip.
